# EUROPÄISCHE PATENTSCHRIFT

(11) **EP 3 135 799 B1**
(45) Veröffentlichungstag und Bekanntmachung des Hinweises auf die Patenterteilung: **07.11.2018**
(21) Anmeldenummer: 16174562.5
(22) Anmeldetag: 15.06.2016
(51) Int. Cl.: D06F 39/00, F25B 13/00, D06F 39/08, D06F 39/04, D06F 33/02

(54) **WASCHMASCHINE MIT KÜHLBETRIEB**
WASHING MACHINE WITH COOLING CYCLE
LAVE-LINGE AVEC MODE DE REFROIDISSEMENT

(30) Priorität: 25.08.2015 CH 12232015
(43) Veröffentlichungstag der Anmeldung: 01.03.2017
(73) Patentinhaber: V-Zug AG, 6300 Zug (CH)
(72) Erfinder: Machau, Susanne, 6330 Cham (CH); Schellenberg, Guido, 5702 Niederlenz (CH)
(74) Vertreter: Sutter, Kurt

(56) Entgegenhaltungen:
- EP-A1- 2 189 568
- EP-A1- 2 224 049
- EP-A1- 2 466 001

## Beschreibung

### Gebiet der Erfindung

Die Erfindung betrifft eine Waschmaschine mit einer Wärmepumpe sowie ein Verfahren zum Betrieb dieser Waschmaschine gemäss Oberbegriff der unabhängigen Ansprüche

### Hintergrund

EP 2 224 049 beschreibt eine Waschmaschine mit einer Wärmepumpe. Die Wärmepumpe wird dazu eingesetzt, das Wasser im Bottich zu erwärmen.

EP 2 189 568 beschreibt einen Waschtrockner mit Wärmepumpe, mit welchem Wasser im Bottich zum Waschen erwärmt werden kann. Zudem kann durch Umkehren der Flussrichtung in der Wärmepumpe im Trocknungsbetrieb die Prozessluft erwärmt werden, während gleichzeitig im Bottich befindliches Wasser gekühlt wird.

### Darstellung der Erfindung

Es stellt sich die Aufgabe, eine Waschmaschine der eingangs genannten Art bereitzustellen, mit welcher die Wäsche besonders schonend behandelt werden kann.

Diese Aufgabe wird von der Waschmaschine gemäss Anspruch 1 erfüllt.

Demgemäss besitzt die Waschmaschine:
- Einen Bottich: Dieser dient der Aufnahme der zu waschenden Wäsche.
- Eine Wärmepumpe: Die Wärmepumpe umfasst in an sich bekannter Weise einen Kompressor, der dazu ausgestaltet ist, ein Wärmepumpenmedium durch einen Kreislauf zu fördern. Weiter umfasst die Wärmepumpe einen Kondensator, eine Drossel und einen Verdampfer. Der Kondensator steht im thermischen Kontakt mit im Bottich befindlichem und/oder in den Bottich fliessendem Prozesswasser, so dass der Kondensator die Temperatur des Prozesswassers im Bottich beeinflussen kann.
- Eine Steuerung: Diese dient dazu, die Komponenten des Geräts zu steuern.

Dabei ist die Steuerung zunächst in an sich bekannter Weise dazu ausgestaltet, in einem "Wärmbetrieb" durch Zirkulation des Wärmepumpenmediums in einer ersten Richtung das Prozesswasser im Bottich mit der Wärmepumpe zu erwärmen.

In diesem Betrieb kann das Wärmepumpenmedium in normaler Richtung durch die Wärmepumpe fliessen, d.h. es durchläuft vom Kompressor her den Kondensator, dann die Drossel, dann den Verdampfer und kehrt sodann zurück zum Kompressor. Dabei wird der Kondensator erwärmt, so dass Wärme für das Prozesswasser im Bottich zur Verfügung steht.

Weiter ist nun die Steuerung aber dazu ausgestaltet, in einem "Kühlbetrieb" durch Zirkulation des Wärmepumpenmediums in einer zweiten Richtung das Prozesswasser im Bottich mit der Wärmepumpe zu kühlen.

In diesem Betrieb kann das Wärmepumpenmedium in umgekehrter Richtung durch die Wärmepumpe fliessen, d.h. es durchläuft vom Kompressor her den Verdampfer, dann die Drossel, dann den Kondensator und kehrt sodann zurück zum Kompressor. Dabei wird der Kondensator gekühlt, so dass dem Prozesswasser im Bottich Wärme entzogen werden kann.

Das Gerät ist dazu ausgestaltet, das Wasser mindestens im Hauptwaschgang zu kühlen.

Im Kühlmoduls findet also die Verdampfung im Kondensator statt und die Kondensation im Verdampfer. (Die Begriffe "Kondensator" und "Verdampfer" werden aber dennoch beibehalten und beschreiben die Aufgabe der entsprechenden Bauteile im Wärmbetrieb.)

Die Erfindung beruht auf der Erkenntnis, dass empfindliche Wäsche beim Waschen in gekühltem Wasser weniger belastet wird. Insbesondere neigt die Wäsche in diesem Falle weniger zum Schrumpfen und/oder zum Abfärben bzw. Ausbluten.

Indem nun dieselbe Wärmepumpe im Wärmbetrieb zum Heizen des Prozesswassers im Bottich und im Kühlbetrieb zum Kühlen des Prozesswassers im Bottich eingesetzt wird und hierzu die Flussrichtung des Wärmepumpenmediums in der Wärmepumpe umgekehrt wird, kann in sehr einfacher Weise ein Gerät bereitgestellt werden, in welchem Wäsche je nach Bedarf geheizt oder gekühlt werden kann.

Vorteilhaft besitzt das Gerät ein Umkehrventil, welches in Flussrichtung zwischen dem Kompressor einerseits und dem Kondensator und dem Verdampfer andererseits angeordnet ist. Das Umkehrventil ist so ausgestaltet, dass die Flussrichtung des Wärmepumpenmediums durch den Kondensator, die Drossel und den Verdampfer umgekehrt werden kann, ohne dass die Förderrichtung des Kompressors umgekehrt wird.

In einer weiteren vorteilhaften Ausführung besitzt das Gerät einen Abwassertank, in welchem Abwasser vom Bottich gesammelt werden kann. Der Verdampfer steht thermisch mit dem Abwassertank in Kontakt steht. Damit kann das Abwasser im Abwassertank im Wärmbetrieb gekühlt und im Kühlbetrieb erwärmt werden. Dies erhöht die Effizienz des Geräts, indem z.B. die Abwärme des Kühlbetriebs in einem folgenden Wärmbetrieb die Effizienz der Wärmepumpe erhöht. Umgekehrt hinterlässt der Wärmbetrieb im Abwassertank Wasser tiefer Temperatur, was zu einer Effizienzsteigerung in einem allfällig nachfolgenden Kühlbetrieb führt.

Die Erfindung betrifft ein Verfahren zum Betrieb einer solchen Waschmaschine. Dabei wird im Wärmbetrieb das Prozesswasser im Bottich mit der Wärmepumpe erwärmt und im Kühlbetrieb das Prozesswasser im Bottich mit der Wärmepumpe gekühlt.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine schematische Darstellung der Komponenten einer Waschmaschine,
Fig. 2 den Kompressor mit dem Umschaltventil in der ersten Stellung und
Fig. 3 den Kompressor mit dem Umschaltventil in der zweiten Stellung.

### Wege zur Ausführung der Erfindung

### Grundaufbau:

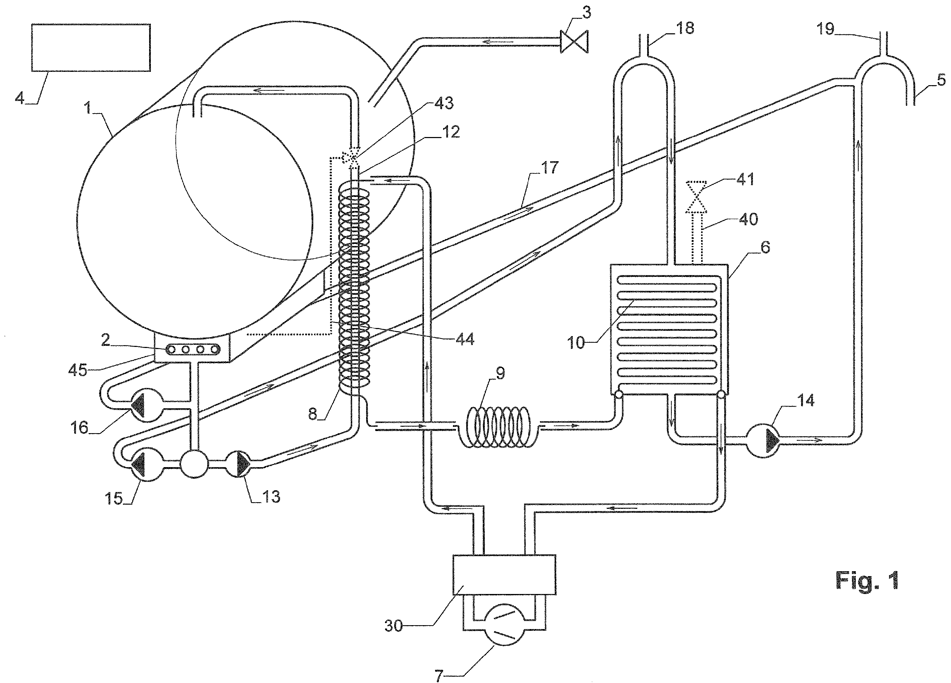

Die in Fig. 1 schematisch dargestellte Waschmaschine entspricht in grossen Teilen dem in EP 2 224 049 beschriebenen Gerät und besitzt einen Bottich 1, in welchem in der Regel eine Trommel (nicht gezeigt) zur Aufnahme der zu waschenden Wäsche angeordnet ist. Am Bottich 1 ist (optional) eine elektrische Heizung 2 angeordnet, welche dazu dient, Prozesswasser elektrisch auf die gewünschte Temperatur zu heizen. Weiter besitzt das Gerät in bekannter Weise einen Trommelantrieb, um die Trommel zu drehen. Eine Steuerung 4 kontrolliert und steuert die Operationen aller Komponenten.

Frischwasser wird dem Gerät zur Verwendung als Prozesswasser über ein Frischwasserventil 3 zugeführt. Gebrauchtes Wasser wird in eine Abwasserleitung 5 abgepumpt.

In der Ausführung nach Fig. 1 kann das Abwasser, d.h. das verbrauchte Prozesswasser, aus dem Bottich 1 über einen Abwassertank 6 geführt werden, bevor es zur Abwasserleitung 5 gelangt.

Das Gerät besitzt weiter eine Wärmepumpe mit einem Kompressor 7, dem ein Umschaltventil 30 zugeordnet ist, auf dessen Rolle später genauer eingegangen wird.

Im konventionellen Betrieb des Geräts (im Folgenden "Wärmbetrieb" genannt) befindet sich das Umschaltventil 30 in einer ersten Stellung, in welcher (wie mit Pfeilen dargestellt) das Wärmepumpenmedium vom Kompressor 7 zu einem Kondensator 8 gepumpt wird, wo unter Abgabe von Wärme eine Verflüssigung stattfindet. Vom Kondensator 8 gelangt das Medium über eine Drossel 9 zu einem Verdampfer 10, wo das Medium unter Aufnahme von Wärme verdampft. Vom Verdampfer 10 läuft das Medium zurück zum Kompressor 7.

Der Begriff "Drossel" umfasst dabei jegliche Art von Kapillaren, Expansionsventilen oder dergleichen, die geeignet sind, den Druck des in der Wärmepumpe gepumpten Mediums vor dem Verdampfer zu reduzieren.

In der in Fig. 1 gezeigten Ausführung ist der Kondensator 8 an einer Zirkulationsleitung 12 angeordnet. Es ist eine Zirkulationspumpe 13 vorgesehen, um Prozesswasser von unterhalb des Bottichs 1 durch die Zirkulationsleitung in einen oberen Bereich des Bottichs 1 zu pumpen, wo es wieder in den Bottich 1 eingespritzt wird. Ist die Wärmepumpe im Betrieb, wird auf diese Weise dem Prozesswasser im Bottich Wärme zugeführt.

Es ist denkbar, den Kondensator 8 auch direkt am Bottich, am Ablaufbereich unterhalb des Bottichs oder an der Zirkulationspumpe 13 anzuordnen.

Der Verdampfer 10 ist in der gezeigten Ausführung thermisch mit dem Behälter 6 und somit mit dem sich im Behälter 6 befindlichen Abwasser gekoppelt. Er kann innerhalb des Behälters 6 oder in oder an dessen Wand angeordnet sein.

In der vorliegenden Ausführung des Geräts sind insgesamt vier Prozesswasserpumpen vorgesehen:
- Eine erste Pumpe 14 dient dazu, Prozesswasser aus dem Abwassertank 6 in die Abwasserleitung 5 zu fördern.
- Eine zweite Pumpe 15 ist zwischen dem Ablaufbereich des Bottichs 1 und dem Abwassertank 6 angeordnet. Sie dient dazu, Prozesswasser aus dem Bottich 1 in den Abwassertank 6 zu fördern.
- Eine dritte Pumpe 16 ist zwischen dem Ablaufbereich des Bottichs 1 und einer Bypass-Leitung 17 angeordnet. Die Bypass-Leitung 17 führt am Abwassertank 6 vorbei zur Abwasserleitung 5, so dass die dritte Pumpe 16 dazu verwendet werden kann, Prozesswasser vom Bottich 1 unter Umgehung des Abwassertanks 6 direkt zur Abwasserleitung 5 zu fördern.
- Die vierte Pumpe ist die bereits erwähnte Zirkulationspumpe 13.

Wie aus Fig. 1 ersichtlich, sind weiter zwei Entlüftungsleitungen 18, 19 vorgesehen, deren Aufgaben in EP 2 224 049 beschrieben werden und auf die im Folgenden deshalb nicht weiter eingegangen wird.

### Umschaltventil:

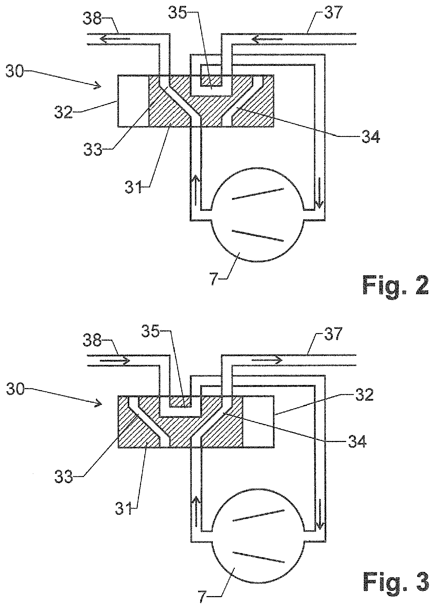

Fig. 2 und 3 illustrieren den Aufbau und die Funktionsweise des Umschaltventils 30, wobei Fig. 2 das Umschaltventil in einer ersten Stellung und Fig. 3 das Umschaltventil in einer zweiten Stellung zeigen.

Das Umschaltventil 30 besitzt einen Ventilkörper 31, welcher achsial verschiebbar in einem Gehäuse 32 angeordnet ist. Im Körper 31 befinden sich Verbindungskanäle 33, 34, 35.

In der ersten Position des Umschaltventils 30 gemäss Fig. 2 wird das Medium über die vom Verdampfer 10 kommende Leitung 37 angesaugt und über den Kanal 35 dem Eingang des Kompressors 7 zugeführt. Sodann wird das Medium vom Ausgang des Kompressors 7 über den Kanal 33 der Leitung 38 zugeführt, die zum Kondensator 8 führt. In diesem Fall wird beim Betrieb der Wärmepumpe wird der Kondensator 8 erwärmt und der Verdampfer 10 gekühlt. Das Gerät befindet sich also im konventionellen Wärmbetrieb, in welchem das Prozesswasser erwärmt wird.

In der zweiten Position des Umschaltventils 30 gemäss Fig. 3 wird das Medium über die vom Kondensator 8 kommende Leitung 38 angesaugt und über den Kanal 35 dem Eingang des Kompressors 7 zugeführt. Sodann wird das Medium vom Ausgang des Kompressors 7 über den Kanal 34 der Leitung 37 zugeführt, die zum Verdampfer 10 führt. In diesem Fall findet die Kondensation des Mediums im Verdampfer 10 statt, während die Verdampfung im Kondensator 8 stattfindet. Somit wird beim Betrieb der Wärmepumpe der Kondensator 8 gekühlt und der Verdampfer 10 erwärmt. Das Gerät befindet sich in diesem Fall im Kühlbetrieb, in welchem das Prozesswasser gekühlt wird.

### Wärmbetrieb:

Die Funktionsweise des Geräts während einem Waschprogramm, d.h. einem Zyklus zum Waschen einer Wäschecharge, im konventionellen Betrieb, d.h. mit erwärmtem Prozesswasser im Bottich, ist wie folgt:
1. Der Prozess beginnt in der Regel mit gefülltem Abwassertank 6. Das Wasser im Abwassertank 6 stammt z.B. aus einem früheren Waschprozess. Es befindet sich u.U. schon längere Zeit im Abwassertank 6 und besitzt z.B. ungefähr Zimmertemperatur.
2. Zu Beginn wird über das Frischwasserventil 3 Frischwasser für den Hauptwaschgang eingelassen, z.B. 20 bis 25 Liter für 8 kg Wäsche. Unter Normbedingungen besitzt dieses Frischwasser z.B. eine Temperatur von 15°C.
3. Gleichzeitig wird die Wärmepumpe gestartet, mit dem Ziel, Wärmeenergie aus dem Abwassertank 6 zu entziehen und dem Prozesswasser im Bottich 1 zuzuführen. Die Wärmepumpe kann, falls gewünscht, solange eingeschaltet bleiben, bis das Prozesswasser im Abwassertank 6 teilweise vereist ist, oder bis die Temperatur im Bottich 1 den gewünschten Wert erreicht hat, siehe EP 2 224 049. Falls nötig kann zusätzlich mit der elektrischen Heizung 2 elektrisch geheizt werden, entweder gleichzeitig mit oder nach dem Heizen mittels Wärmepumpe. Mit dem so aufgewärmten Prozesswasser wird die Wäsche gewaschen.
4. Nachdem die Wärmepumpe nicht mehr benötigt wird und während die Wäsche gewaschen wird, kann das verbleibende flüssige Prozesswasser im Abwassertank 6 durch Betreiben der ersten Pumpe 14 in die Abwasserleitung 5 gefördert werden. Die zweite Pumpe 15 ist dabei ausgeschaltet, so dass der Abwassertank 6 vom flüssigen Prozesswasser entleert wird.
5. Gegen Ende des Hauptwaschgangs wird die zweite Pumpe 15 in Betrieb gesetzt. Dadurch gelangt warmes Prozesswasser aus dem Bottich 1 in den Abwassertank 6. Allfälliges Eis im Abwassertank 6 wird dabei angeschmolzen oder ganz geschmolzen.
6. Über Frischwasserventil 3 wird neues Frischwasser (z.B. 15 bis 20 Liter) für eine Spülphase eingelassen.
7. Optional kann nun die Wärmepumpe wieder in Gang gesetzt werden, um die Wärme vom Abwassertank 6 in das Prozesswasser im Bottich 1 zu fördern. Wiederum kann dabei das Prozesswasser im Abwassertank 6 teilweise gefroren werden.
8. Das Wasser aus dem Bottich 1 wird wiederum abgepumpt und kann optional bei Bedarf zum Enteisen des Abwassertanks 6 verwendet werden.
9. Über Frischwasserventil 3 wird neues Frischwasser (z.B. 15 bis 20 Liter) für eine Veredlungsphase (optional) eingelassen.
10. Die Wärmepumpe kann optional wieder in Gang gesetzt werden, um die Wärme vom Abwassertank 6 in das Prozesswasser im Bottich 1 zu fördern.
11. Das Wasser aus dem Bottich 1 wird wiederum abgepumpt und kann nötigenfalls dazu verwendet werden, den Abwassertank 6 zu enteisen.
12. Während einer Schleuderphase wird der Wäsche durch Zentrifugieren Wasser entzogen. Da dabei relativ schnell eine grössere Wassermenge anfällt, welche rasch abtransportiert werden muss, erfolgt in dieser Zeit die Entleerung des Bottichs vorzugsweise zumindest teilweise über die dritte Pumpe 16 und die Bypass-Leitung 17.

Wie sich aus dem Obigen ergibt, kann somit im konventionellen Betrieb das Prozesswasser im Bottich 1 mit der Wärmepumpe geheizt werden, indem das Prozesswasser im Abwassertank 6 abgekühlt wird

Für Details des konventionellen Betriebs wird auf EP 2 224 049 verwiesen.

### Kühlbetrieb:

Im Kühlbetrieb wird das Prozesswasser im Bottich 1 in mindestens einer Prozessphase, beispielsweise im Hauptwaschgang, in der Spülphase, in der Veredlungsphase und/oder bei einem allfälligen Vorspülen, mit der Wärmepumpe gekühlt. Hierzu wird das Umschaltventil 30 in seine zweite Stellung gemäss Fig. 3 gebracht, so dass der "Kondensator" 8 (der nun eigentlich als Verdampfer arbeitet) gekühlt wird, während der "Verdampfer 10" (der nun eigentlich als Kondensator arbeitet) erwärmt wird.

Somit kann das Wasser im Bottich auf Temperaturen unter 20°C, insbesondere auf Temperaturen unter 15°C, insbesondere auf einen Bereich zwischen 3°C und 15°C, abgekühlt werden. Dadurch wird empfindliche Wäsche geschont. Um diese Temperatur des Prozesswassers im Bottich zu erreichen, steuert die Steuerung 4 die Wärmepumpe entsprechend an.

Erfindungsgemäß wird das Wasser mindestens während dem Hauptwaschgang gekühlt, da in dieser Phase die Wäsche am intensivsten behandelt wird.

Die Abwärme, welche dabei entsteht, kann dem Wasser im Abwassertank 6 zugeführt werden.

### Zirkulationssystem:

Wie bereits erwähnt, ist eine Zirkulationspumpe 13 vorgesehen, um das Prozesswasser aus dem Bottich 1 durch die Zirkulationsleitung 12 und wieder zurück in den Bottich 1 zu pumpen. Dabei kommt das Prozesswasser in thermischen Kontakt mit dem Kondensator 8.

Im Wärmbetrieb wird das Prozesswasser auf diese Weise vom Kondensator 8 erwärmt, im Kühlbetrieb wird es vom Kondensator 8 (der dann als Verdampfer wirkt) gekühlt.

Zu Beginn des Prozesses im Kühlbetrieb ist das Prozesswasser jedoch noch relativ warm. Um die Wäsche möglichst stark zu schonen, sollte zu diesem Zeitpunkt der Kontakt von Prozesswasser und Wäsche möglichst noch vermieden werden.

Deshalb kann das Gerät dazu ausgestaltet sein, das Prozesswasser derart durch die Zirkulationsleitung 12 zu führen, dass ein Kontakt mit der Wäsche vermieden wird. Erst wenn die Temperatur des Prozesswassers ausreichend tief ist (insbesondere unterhalb 15°C liegt, vorzugsweise unterhalb 6°C), wird die Wäsche in Kontakt mit dem Prozesswasser gebracht.

Hierzu kann, wie in Fig. 1 in gestrichelten Linien dargestellt, ein Ventil oder eine Weiche 43 vorgesehen sein, um das durch die Zirkulationsleitung 12 geförderte Prozesswasser wahlweise in einem oberen oder einem unteren Bereich in den Bottich 1 zurückzuführen. Wird das Prozesswasser in den oberen Bereich zurückgeführt, gelangt es in den Kontakt mit der Wäsche. Wird das Prozesswasser in den unteren Bereich zurückgeführt, gelangt es nicht in Kontakt mit der Wäsche.

In der Ausgestaltung gemäss Fig. 1 ist hierzu an der Zirkulationsleitung 12 eine Zweigleitung 44 angeordnet, welche im Sumpf 45 (d.h. in das untere Ende) des Bottichs 1 mündet. Mit dem Ventil bzw. der Weiche 43 kann das Prozesswasser wahlweise unten oder oben in den Bottich 1 eingespeist werden.

### Bemerkungen:

Anstelle des Umschaltventils 30 kann auch ein Kompressor eingesetzt werden, der das Medium wahlweise in die eine oder die andere Richtung fördern kann, d.h. dessen Pumprichtung umkehrbar ist.

Im Kühlbetrieb kann die Abwärme mindestens teilweise auch der Umgebung anstatt dem Abwassertank 6 zugeführt werden.

Eine weitere Möglichkeit zum Abführen der Abwärme im Kühlbetrieb ist mit gestrichelten Linien in Fig. 1 dargestellt. In dieser Variante kann das Gerät dazu ausgestaltet sein, den Verdampfer 10 mit Frischwasser zu kühlen. Hierzu kann insbesondere eine Frischwasser-Zufuhrleitung 40 vorgesehen sein, über welche dem Abwassertank 6 direkt (d.h. nicht über den Bottich 1) Frischwasser zugeführt werden kann. Ein Ventil 41 wird verwendet, um das Frischwasser bedarfsweise zuzuführen.

Vorzugsweise wird im Kühlbetrieb dem Abwassertank 6 dann Frischwasser zugeführt, wenn die Temperatur im Abwassertank 6 über eine vorgegebene Schwelltemperatur ansteigt.

Zusammenfassend ist also bei einer Waschmaschine eine Wärmepumpe umfassend einen Kompressor 7, einen Kondensator 8, eine Drossel 9 und einen Verdampfer 10 vorgesehen. Der Kondensator 8 befindet sich im thermischen Kontakt mit dem Prozesswasser im Bottich 1 des Geräts, sei es direkt, oder sei es indirekt, z.B. über eine Zirkulationsleitung. Im Wärmbetrieb wird das Prozesswasser im Bottich 1 mit der Wärmepumpe erhitzt. Im Kühlbetrieb wird das Prozesswasser im Bottich 1 mit der Wärmepumpe gekühlt. Hierzu kann die Flussrichtung des Wärmepumpenmediums durch den Kondensator 8, die Drossel 9 und den Verdampfer 10 beispielsweise mit einem Umkehrventil 30 umgekehrt werden. Durch den Einsatz von gekühltem Prozesswasser im Bottich 1 wird eine besonders schonende Behandlung der Wäsche ermöglicht.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Waschmaschine mit
einem Bottich (1) zur Aufnahme von Wäsche,
einer Wärmepumpe umfassend einen Kompressor (7) zum Fördern eines Wärmepumpenmediums, einen Kondensator (8), eine Drossel (9) und einen Verdampfer (10), wobei der Kondensator (8) im thermischen Kontakt mit im Bottich (1) befindlichem und/oder in den Bottich (1) fliessendem Prozesswasser steht, und
einer Steuerung (4),
wobei die Steuerung (4) dazu ausgestaltet ist, in einem Wärmbetrieb durch Zirkulation des Wärmepumpenmediums in einer ersten Richtung das Prozesswasser im Bottich (1) mit der Wärmepumpe zu erwärmen,
wobei die Steuerung (4) dazu ausgestaltet ist, in einem Kühlbetrieb durch Zirkulation des Wärmepumpenmediums in einer zweiten Richtung das Prozesswasser im Bottich (1) mit der Wärmepumpe zu kühlen,
**dadurch gekennzeichnet, dass** das Gerät dazu ausgestaltet ist, das Prozesswasser mindestens in einem Hauptwaschgang zu kühlen.

2. Waschmaschine nach Anspruch 1 mit einem Umkehrventil (30), welches zwischen dem Kompressor (7) einerseits und dem Kondensator (8) und dem Verdampfer (10) andererseits angeordnet ist und mit welchem eine Flussrichtung des Wärmepumpenmediums durch den Kondensator (8), die Drossel (9) den Verdampfer (10) umkehrbar ist.

3. Waschmaschine nach einem der vorangehenden Ansprüche, wobei die Steuerung (4) dazu ausgestaltet ist, im Kühlbetrieb das Prozesswasser im Bottich (1) unter 20°C, insbesondere auf einen Bereich zwischen 0°C und 5°C, abzukühlen.

4. Waschmaschine nach einem der vorangehenden Ansprüche mit einem Abwassertank (6), in welchem Abwasser vom Bottich (1) sammelbar ist, wobei der Verdampfer (10) thermisch mit dem Abwassertank (6) in Kontakt steht.

5. Waschmaschine nach einem der vorangehenden Ansprüche, wobei die Waschmaschine dazu ausgestaltet ist, den Verdampfer (10) im Kühlbetrieb mit Frischwasser zu kühlen.

6. Waschmaschine nach den Ansprüchen 4 und 5, wobei am Abwassertank (6) eine Frischwasserzufuhr (40) angeordnet ist, um dem Abwassertank (6) direkt Frischwasser zuzuführen und so den Verdampfer (10) zu kühlen.

7. Waschmaschine nach einem der vorangehenden Ansprüche mit einer Zirkulationsleitung (12) und einer Zirkulationspumpe (13), um das Prozesswasser aus dem Bottich (1) durch die Zirkulationsleitung (12) und wieder zurück in den Bottich (1) zu führen, wobei der Kondensator (8) in thermischem Kontakt mit der Zirkulationsleitung (12) steht.

8. Waschmaschine nach Anspruch 7, wobei sie dazu ausgestaltet ist, das Prozesswasser derart durch die Zirkulationsleitung (12) zu führen, dass ein Kontakt mit der Wäsche vermieden wird, wobei ein Ventil oder eine Weiche (43) vorgesehen ist, um das durch die Zirkulationsleitung (12) geförderte Prozesswasser wahlweise in einem oberen oder einem unteren Bereich in den Bottich (1) zurückzuführen.

9. Verfahren zum Betrieb der Wärmepumpe nach einem der vorangehenden Ansprüche, bei welchem im Wärmbetrieb das Prozesswasser im Bottich (1) mit der Wärmepumpe erwärmt wird, **dadurch gekennzeichnet, dass** im Kühlbetrieb das Prozesswasser im Bottich (1) mit der Wärmepumpe gekühlt wird.

## Claims

1. Washing machine with
a vat (1) for receiving laundry,
a heat pump comprising a compressor (7) for transporting a heat pump medium, a condenser (8), a throttle (9) and an evaporator (10), wherein the condenser (8) is in thermal contact with process water located inside the vat (1) and/or flowing into the vat (1), and
a control (4),
wherein the control (4) is adapted to heat up the process water inside the vat (1) with the heat pump by circulating the heat pump medium in a first direction in heating operation,
wherein the control (4) is adapted to cool down the process water inside the vat (1) with the heat pump by circulating the heat pump medium in a second direction in cooling operation,
**characterized in that** the device is adapted to cool down the water at least during a main washing cycle.

2. Washing machine according to claim 1, with an inversion valve (30) arranged between the compressor (7) on the one side and the condenser (8) and the evaporator (10) on the other side and by means of which a flow direction of the heat pump medium through the condenser (8), the throttle (9), the evaporator (10) can be inversed.

3. Washing machine according to one of the preceding claims, wherein the control (4) is adapted to cool down the process water in the vat (1) below 20°C in cooling operation, particularly in a range between 0°C and 5°C.

4. Washing machine according to one of the preceding claims, with a discharge water tank (6), inside which the discharge water from the vat (1) is collected, wherein the evaporator (10) is in thermal contact with the discharge water tank (6).

5. Washing machine according to one of the preceding claims, wherein the washing machine is adapted to cool down the evaporator (10) with fresh water in the cooling operation.

6. Washing machine according to claim 4 and 5, wherein a fresh water supply (40) is arranged at the discharge water tank (6) for directly supplying fresh water to the discharge water tank (6) and by this to cool down the evaporator (10).

7. Washing machine according to one of the preceding claims, with a circulation pipe (12) and a circulation pump (13) for guiding the process water out of the vat (1) through the circulation pipe (12) et back again into the vat (1), wherein the condenser (8) is in thermal contact with the circulation pump (12).

8. Washing machine according to claim 7, being adapted to guide the process water through the circulation pipe (12) in such a way that a contact with the laundry is avoided, wherein a valve or a switch (43) is provided for returning the process water supplied through the circulation pipe (12) optionally into an upper or a lower section in the vat (1).

9. Method for operating the heat pump according to one of the preceding claims, wherein the process water in the vat (1) is heated up with the heat pump in heating operation, **characterized in that** the process water in the vat (1) is cooled down with the heat pump in cooling operation.

## Revendications

1. Machine à laver avec
une cuve (1) pour recevoir du linge,
une pompe de chaleur comprenant un compresseur (7) pour transporter un médium de pompe de chaleur, un condenseur (8), un étrangleur (9) et un évaporateur (10), le condenseur (8) étant en contact thermique avec de l'eau de processus située dans la cuve (1) et/ou s'écoulant dans la cuve, et
une commande (4),
la commande (4) étant adaptée à chauffer l'eau de processus dans la cuve (1) avec la pompe de chaleur par circulation du médium de pompe de chaleur dans une première direction en mode de chauffage,
la commande (4) étant adaptée à refroidir l'eau de processus dans la cuve (1) avec la pompe de chaleur par circulation du médium de pompe de chaleur dans une deuxième direction en mode de refroidissement,
**caractérisée en ce que** le dispositif est adapté à refroidir l'eau au moins pendant un cycle de lavage principal.

2. Machine à laver selon la revendication 1, avec une vanne d'inversion (30) arrangée entre le compresseur (7) d'un côté et le condenseur (8) et l'évaporateur (10) de l'autre côté et par laquelle une direction d'écoulement du médium de pompe de chaleur à travers le condenseur (8), l'étrangleur (9), l'évaporateur (10) peut être inversée.

3. Machine à laver selon l'une des revendications précédentes, la commande (4) étant adaptée à refroidir l'eau de processus dans la cuve (1) au-dessous de 20°C en mode de refroidissement, particulièrement dans une gamme comprise entre 0°C et 5°C.

4. Machine à laver selon l'une des revendications précédentes, avec un récipient d'eau de décharge (6), dans lequel de l'eau de décharge de la cuve (1) est collectée, l'évaporateur (10) étant en contact thermique avec le récipient d'eau de décharge (6).

5. Machine à laver dans une des revendications précédentes, la machine à laver étant adaptée à refroidir l'évaporateur (10) avec de l'eau fraîche dans le mode de refroidissement.

6. Machine à laver selon la revendication 4 et 5, une alimentation d'eau fraîche (40) étant arrangée au récipient d'eau de décharge (6), afin d'alimenter d'eau fraîche au récipient d'eau de décharge (6) directement et par cela de refroidir l'évaporateur (10).

7. Machine à laver selon une des revendications précédentes, avec un tuyau de circulation (12) et une pompe de circulation (13) pour guider l'eau de processus hors de la cuve (1) à travers le tuyau de circulation (12) et de nouveau dans la cuve (1), le condenseur (8) étant en contact thermique avec le tuyau de circulation (12).

8. Machine à laver selon la revendication 7, étant adaptée à guider l'eau de processus à travers le tuyau de circulation (12) de manière telle qu'un contact avec le linge est évité, une soupape ou un aiguillage (43) étant prévu pour retourner l'eau de processus alimentée dans le tuyau de circulation (12) optionnellement dans une section supérieure ou inférieure dans la cuve (1).

9. Procédé d'opération de la pompe de chaleur selon l'une des revendications précédentes, l'eau de processus dans la cuve (1) étant chauffée avec la pompe de chaleur en mode de chauffage, **caractérisé en ce que** l'eau de processus dans la cuve (1) est refroidie avec la pompe de chaleur en mode de refroidissement.
